# EUROPEAN PATENT SPECIFICATION

(11) **EP 3 762 620 B1**
(45) Date of publication and mention of the grant of the patent: **28.09.2022**
(21) Application number: 19712627.9
(22) Date of filing: 28.02.2019
(51) Int. Cl.: F16B 11/00

(54) **CONNECTING A COMPONENT TO GLASS**
VERBINDEN EINES BAUTEILS MIT GLAS
LIAISON D'UN ÉLÉMENT À DU VERRE

(30) Priority: 08.03.2018 BE 201805142
(43) Date of publication of application: 13.01.2021
(73) Proprietor: Exypnos BVBA, 9150 Kruibeke (BE)
(72) Inventor: VAN DYCK, Johan Ria Hugo, 2900 Schoten (BE); LANGIE, Stijn Jozef Elvire, 9080 Lochristi (BE)
(74) Representative: Arnold & Siedsma
(86) International application number: PCT/IB2019/051612
(87) International publication number: WO 2019/171221

(56) References cited:
- EP-A2- 0 379 246
- EP-A2- 0 870 933
- EP-A2- 1 329 580
- WO-A1-01/81774

## Description

The present invention relates to the connecting of a component to a panel. The invention relates more particularly to a method for connecting a component to a glass panel.

Glass panels are used in many sectors as part of a greater whole. For this purpose it is often necessary to connect components, these being parts or elements, to the glass panel. In many situations it is undesirable to provide a perforation in the glass for the purpose of mechanical connection to a component. It is also often undesirable to connect the component at the position of the edge of the glass. A glue is used to connect a component in a central zone of the glass without the provision of a perforation in glass. More specifically, the component is connected to the glass via adhesion. Each of documents EP0870933A2, EP132980A2 and WO01/81774A1 relate to connecting of a component to a panel.

In particular EP0870933A2 discloses a method of producing a connection between two components in which a connecting part is adhesively bonded to a first component, and a second component is fitted, preferably clipped, to the connecting part, an adhesive is applied to the first component in the connection area, in that the connecting part is of strip-like or strand-like design and has a plurality of form-fitting apertures running through from the outside towards the first component and into which a casting compound is put in such a way that, on one side, it rests on the adhesive and, on the other side, covers the apertures on the outside, and in that the fitting of the second component to the connecting part is carried out after the casting compound has hardened.

In the automobile sector glass is frequently used for the purpose of manufacturing windows in vehicles, including side windows, sunroofs, the windscreen and the rear window. These windows are provided increasingly often with sensors, for instance cameras, and with parts of use and/or mounting parts. An example of a part of use is a mirror which is suspended from the windscreen. An example of a mounting part is a connecting piece for holding the side windows during upward and downward movement thereof. Use is made for this purpose of components which are connected to the glass and on which the sensors, parts of use and/or mounting parts can be provided.

In practice, such a component is typically connected to a glass panel via a glue. The glue is applied between a connection side of the component and the panel. The connection side is typically held at a distance from the panel, for instance by spacers, in order to give the glue a sufficiently great thickness. In order to guarantee a good bond between the glue and the glass, the glass has to be cleaned of dirt, grease and dust to maximum extent, and typically also provided with a primer layer. In order to guarantee a good bond between the component and the glue layer, the connection side of the component also has to be cleaned of dirt, grease and dust to maximum extent, and the connection side of the component also has to be provided with a primer layer. In the case of the component it is further important for the material from which the component is manufactured to be compatible with the glue. This compatibility is necessary in order to realize a good bond between the glue and the component. This compatibility further has the result that, when a component is manufactured from an alternative material, a different glue and/or different primer has to be used. This greatly limits designers in the choice of material of the component. More specifically, components will typically have to be manufactured from more expensive materials in order to enable a good glueing.

A further drawback of glueing the component to the glass panel is related to the drying time of the glue. During the drying time of the glue, which can typically amount to one or more hours, the panel with the component must be kept in conditioned circumstances. In addition, no external force should engage on the component during the drying process, because this may alter the position of the component relative to the panel. All these factors make connecting of a component to a glass plate complex and expensive.

It is an object of the invention to simplify the glueing of a component to a panel. This object is solved by the invention as set out in claim 1. Further embodiments of the invention are set out in the dependent claims.

The invention provides for this purpose a method for connecting a component to a panel, wherein the component comprises a connection side which is positioned at a distance from the panel and wherein a compound is introduced between the connection side and the panel, characterized in that a zone is delimited between the connection side and the panel such that a physical barrier is formed for the compound, which zone has at least an opening in the connection side, and wherein a compound in liquid form is applied above the opening so as to flow through the opening and fill the zone, wherein above said opening a further zone is at least partially filled by the compound such that, after at least partial curing of the compound, the component is held mechanically by the compound.

According to the invention, the component is connected to the panel via the cured compound. Any compound which has an adhesive force for the surface of the panel and which is in liquid form when applied is usable within the context of the present invention. The compound is adapted to bond to the panel via an adhesive force. More specifically, the compound is selected to bond with a predetermined adhesive force to a surface of the panel. The compound is further provided to hold the component mechanically. This is the result of the specific application of the compound in liquid form above an opening, wherein a zone below the opening and a zone above the opening are filled by the compound. During the curing the compound will form a volume below the opening which connects to the volume through the opening and to a volume above the opening. These volumes extend all around the edges of the opening, such that the component is held mechanically at the position of the opening. As a result, the adhesive force between the compound and the component is not determining for the holding of the component, or does so to lesser extent. This allows a compound to be chosen which bonds well to the panel, without the adhesive complementarity of the compound and the component having to be taken into consideration explicitly. This is because the component is held mechanically by the compound.

Because the adhesive bond between the component and the compound is not critical for the connection of the component to the panel, a designer has considerably more freedom when choosing the material of the component, and when choosing the material of the compound. In the prior art an adhesive complementarity must always be sought between the material of the component and the compound, while this is no longer necessary according to the present method. In the present method it suffices that an adhesive complementarity is only sought between the surface of the panel to which the component is applied and the compound. The component can thereby be manufactured from a cheaper material or be manufactured from a material which can be shaped more easily and/or freely. As a further consequence, the pretreatment steps of the component, which are necessary in the prior art to guarantee a good bond, are no longer necessary. This considerably simplifies the method for connecting a component to a panel.

As already indicated above, use can be made of any compound that has an adhesive complementarity with the surface to which the component is applied. For a good connection to be formed between the component and the panel by means of the compound, the compound has to fill the zone between the connection side of the component and the surface of the panel as fully as possible when applied. The compound is for this purpose in liquid form when applied. The compound is preferably in hyperfluid form when applied. Such a hyperfluid material is typically applied in an open mould and is known to fill the mould easily and wholly, into its smallest openings. The hyperfluid material lies closely against the edges of the mould. In the method according to the invention the mould is formed by the panel and the component, more particularly by the zone between the connection side of the component and the surface of the panel. As already indicated above, this zone is accessible by means of an opening in the connection side of the component. The liquid or hyperfluid compound can be applied through the opening and into the delimited zone. In order to realize the connection between component and material the liquid compound will fill the delimited zone as fully as possible. The hyperfluid material will also fill the opening, and the hyperfluid material will fill a further zone above the opening.

Liquid and hyperfluid compounds with a short curing time of between several tens of seconds and several minutes are known. It will be apparent here to the skilled person that in this context curing time does not relate to full curing of the compound, but to curing to a point where the bond between compound and panel has occurred to sufficient extent to prevent undesired displacement of the component and to prevent undesired deformation of the compound, also referred to as time to handling strength. Such a short curing time is only possible because an adhesive bond with only one material is necessary, more specifically the material of the panel. In a prior art situation an adhesive bond has to take place with two typically different materials, which typically also requires considerably more time. A further advantage of the invention is therefore that the panel and the component can be connected considerably faster and without drying time, or with a less complicated conditioned drying time. This makes connecting of a component to a panel in an industrial context considerably more simple and inexpensive.

The compound preferably has a dynamic viscosity, measured at a shear rate of 1/s, of lower than 35,000 mPa.s when it comes to lie on at least a part of the panel. This compound is known as a hyperfluid material. Such a hyperfluid material is typically applied in an open mould and is known to fill the mould easily and wholly, into its smallest openings. The hyperfluid material lies closely against the edges of the mould.

The panel is preferably a glass panel. The invention was specifically developed in the context of the automobile sector, wherein components are attached to glass. A compound with a dynamic viscosity as defined in claim 1 is also already in use here for the purpose of forming an edge on a glass panel in order to further connect the glass panel to the bodywork of the vehicle. Using the same compound for the purpose of connecting a component to the glass panel further optimizes the process of preparing the glass for placing in the vehicle. This is because both the edges of the glass can be formed and the components can be glued to the glass in one pretreatment step.

The zone is preferably delimited by the provision of an edge which extends all around the zone between the connection side and the panel in order to prevent the compound from flowing beyond the edge. The compound is hyperfluid, whereby it has the option and/or tendency to quickly flow out over a wide area. By providing an edge around the zone the flow of the compound can be delimited. Because the edge is provided, the thickness of the zone can be optimized so as to achieve multiple effects. A first desired effect is that the zone is filled substantially wholly. A gradual filling of the zone can be achieved by making the zone sufficiently thick. A second effect relates to the compound mechanically holding the component when the compound is at least partially cured. By making the zone sufficiently thick the strength of the compound after curing, more specifically the mechanical resistance against tearing or breaking of the cured material, is sufficiently great to hold the component mechanically.

The edge is preferably formed by a thickened portion on the connection side of the component. By providing the thickened portion on the connection side of the component, the component can already be provided during the design thereof with edges which delimit the zone. Alternatively, the glass can be provided with an upright edge, for instance by application of a silicone layer on the glass.

The edge is preferably formed by a compressible material and the edge preferably has a thickness equal to or greater than the stated distance, such that tolerances in said distance are compensated for by the edge. Because the compound with which the zone is filled is in liquid form, and preferably in hyperfluid form, when applied, even a minuscule opening between the connection side and the glass panel is enough to create leakage of the compound out of the zone. This can be prevented by providing the edge with a compressible, i.e. an elastic or plastically deformable, material. The edge is then typically made slightly thicker than necessary for bridging the distance, such that the edge is compressed when the component is positioned relative to the panel. Compression of the edge will result in a guaranteed or at least better connection of the edge against the connection side and the panel, such that an undesired opening can be avoided.

The method preferably further comprises of, during or after positioning of the component, orienting the panel with the component such that the opening is situated above the zone. When the opening is situated above the zone, application of the liquid or hyperfluid compound will be facilitated. This is because the compound will flow downward through the opening and fill the zone as a result of the force of gravity.

The further zone is preferably delimited by the provision of an upright edge which extends all around the opening. Providing an edge forms a reservoir above the opening which can be filled at least partially with the compound.

The opening preferably covers a first surface area and the zone preferably extends over a second surface area, greater than the first surface area, and the further zone preferably extends over a third surface area greater than the first surface area. By making the surface area of the zone and further zone greater than the surface area of the opening, the compound will spread over a wider area below and above the opening, whereby, after curing of the compound, the component will be held mechanically on the panel at the position of the opening by means of the compound. The compound will typically engage round the edges of the opening and thus enclose the edges of the opening. Because the edges of the opening are enclosed, both above the opening and below the opening, the component will be held.

The second surface area is preferably at least double the size of the first surface area and the third surface area is preferably at least double the size of the first surface area. This strengthens the mechanical attachment, i.e. it becomes difficult to pull the cured compound situated below or above the component through the opening.

The size of the first surface area preferably amounts to at least 5%, preferably at least 10% of the size of the second surface area. This feature has the result that the surface area of the opening is sufficiently large relative to the surface area of the zones, whereby after curing the compound also has a sufficiently great strength at the position of the opening to prevent tearing off of the compound at the position of the opening. This again improves the mechanical connection of component and compound.

The zone is preferably formed with a thickness greater than 0.5 mm, preferably greater than 1.0 mm, and the further zone is preferably filled such that the compound extends at least 0.5 mm, preferably at least 1.0 mm above the edge of the opening. The thicknesses of the zone also affect the mechanical strength of the compound after curing. By making the thickness of the zone sufficiently great, tearing off of the compound is impeded and a strong mechanical connection is obtained.

According to the invention an external part and at least two components are further provided, each having a flange for engaging at least partially over an edge of the external part, and the method preferably further comprises of placing the two components for each engaging with their flange over the edge and thus connect the external part to the panel via the two components. The two components are firmly connected to the panel in a simple and inexpensive manner. The external part is indirectly connected to the panel. Because the two components engage with a flange over the edge of the part, the part is pressed via the components onto the panel. Because the components are connected to the panel, and because the external part lies with its edge under flanges of the component, the external part is also connected to the panel. In this way the components form a multifunctional and versatile auxiliary means for fixing all kinds of external parts onto panels.

Further disclosed but not forming part of the invention is a component which is suitable for application of the method. This component preferably has a connection side provided to be positioned at a distance from the panel such that a compound can be introduced between the connection side and the panel, wherein a zone is delimited between the connection side and the panel such that a physical barrier is formed for the compound, which zone has at least an opening in the connection side, and wherein a compound in liquid form can be applied above the opening so as to flow through the opening and fill the zone, wherein above said opening a further zone is provided to be filled at least partially by the compound such that, after at least partial curing of the compound, the component is held mechanically by the compound. The component is preferably provided at the position of at least a portion of its periphery with a flange which is configured to extend at a predetermined distance from the panel so that the flange can engage over an edge of an external part.

The invention will now be further described on the basis of an exemplary embodiment shown in the drawing.

In the drawing:
figure 1 shows a component, positioned on a panel, at the start of the method for the connecting;
figures 2 and 3 show intermediate stages of the method of the component and the panel of figure 1;
figure 4 shows a final stage of the method of the component and the panel of figure 1;
figure 5 shows a top view of multiple embodiments of the connecting segment of the component;
figure 6 shows an alternative embodiment of connection between a component and a panel;
figure 7 shows a top view of an external part which is connected via three components; and
figure 8 shows a cross-section of a component with a flange.

The same or similar elements are designated in the drawing with the same reference numerals.

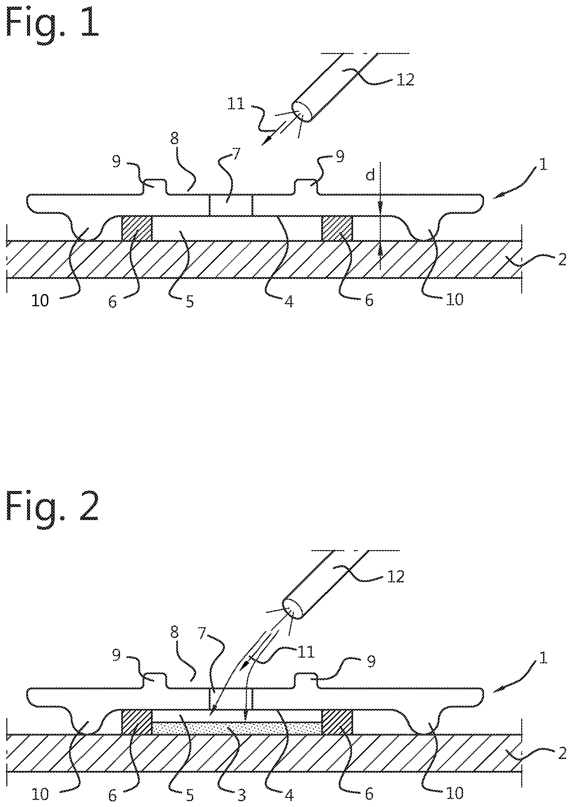

Figure 1 shows a component 1 which is placed on a panel 2, for instance a glass panel. Figure 1 shows only the segment of component 1 which is relevant for the connection of component 1 to panel 2. It will be apparent to the skilled person that the component 1 typically has further segments which are adapted to fulfil the further functionalities of the component. Component 1 can thus comprise in a further segment (not shown) a holder for a sensor, such as a camera. Component 1 can alternatively and/or additionally have a connector for further connection of panel 2 via the component to a larger structure.

The panel 2 in figure 1 is preferably a glass panel or glass plate. The skilled person will appreciate that the invention is in the first instance applicable in a wider context, wherein panel 2 can also be manufactured from other materials. Panel 2 can thus be a plastic panel, a metal panel, a stone panel or a wooden panel. The invention came about within the scope of glass panels, particularly in the automobile sector, wherein components are connected to the glass, for instance for the purpose of mounting a mirror on a windscreen.

Figure 1 shows a starting situation of the method according to the invention, in which component 1 is positioned on glass panel 2. Component 1 typically has a plurality of spacers 10. Spacers are typically formed by providing thickened portions or protrusions on the connection side 4 of component 1. Connection side 4 is a substantially flat side which extends substantially parallel to glass panel 2 when component 1 is connected to panel 2. Spacers 10 ensure that connection side 4 is held at a constant distance d from glass panel 2. It will be apparent to the skilled person that glass panel 2, particularly in the automobile sector, can typically have a curvature. Depending on the size of component 1, it may be necessary or advantageous for the connection side 4 of component 1 to have a corresponding curvature in order to keep the distance d between connection side 4 of component 1 and panel 2 substantially constant. When the curvature of panel 2 is slight, and/or when the size of component 1 is limited, the component can be provided with a flat connection side 4 without this having an adverse effect on the connection. Owing to the limited curvature and/or the limited size of the component, the distance d can then still be deemed substantially constant. On the basis of the above elucidation, the skilled person will understand when a curvature of connection side 4 of component 1 is desired.

Provided in connection side 4 of component 1 is an opening 7. This opening 7 extends through component 1 so as to be accessible from an upper side of the component. The upper side of component 1 is defined as the side lying opposite connection side 4. This is because, in performing of the method, component 1 will be positioned on the panel and oriented such that connection side 4 faces downward. In such an orientation, and because opening 7 extends to an upper side of component 1, a compound can be carried via a nozzle 12 to the opening 7 so as to flow through opening 7.

The compound is preferably a hyperfluid material as described above, which cures. In this context component 1 and panel 2 together form a mould in which the compound is applied. The curable compound can be a non-thixotropic (Newtonian) or a thixotropic (non-Newtonian) material or fluid/liquid. In order to be able to obtain a good surface quality without having to exert too high a pressure on the curable compound during the application, the curable compound has a dynamic viscosity, measured at a shear rate of 1/s, which is lower than 100,000 mPa.s, preferably lower than 75,000 mPa.s, more preferably lower than 35,000 mPa.s and most preferably lower than 10,000 mPa.s when applied on at least a portion of the mould surface (for Newtonian fluids the dynamic viscosity is not subject to the shear rate and can be determined as according to ASTM D445-03). The curable compound preferably has this dynamic viscosity at a temperature lower than 80°C, more preferably at a temperature lower than 60°C, most preferably at a temperature lower than 50°C. The lower the viscosity, the better the surface quality. In this respect the curable compound has a dynamic viscosity which is preferably even lower than 10,000 mPa.s, more preferably even lower than 5000 mPa.s and most preferably even lower than 2000 mPa.s when it arrives on the mould surface, i.e. when covering a first part of the mould surface. In order to achieve such viscosities a suitable formulation can first of all be chosen for the curable compound. The dynamic viscosity of a specific formulation can moreover be reduced by increasing the temperature of the curable compound. The curable compound can for instance be applied at room temperature. In order to accelerate the curing reaction the curable compound can however also be applied at a higher temperature, for instance at 65°C, on a non-heated surface or on a surface heated to for instance 45°C. The curable compound is applied directly to the whole mould surface, it has the required lower viscosity when it is applied to the whole mould surface.

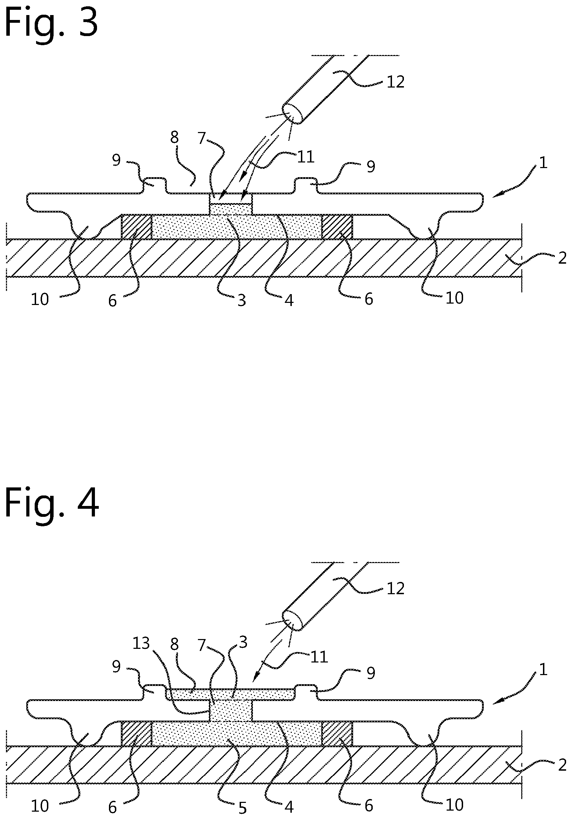

In this respect it is preferred that the curable compound is applied and is given time to cure before the connecting element is produced (i.e. until the filled zones as shown in figure 4 no longer have a tendency to permanently deform in the case of further manipulation of panel 2 with component 1), more particularly without exerting a pressure higher than 500 mbar in the closed cavity, preferably without exerting a pressure higher than 350 mbar in the closed cavity, more preferably without exerting a pressure higher than 150 mbar in the closed cavity. In this respect it is assumed that the ambient pressure is the reference pressure (zero bar).

The curable compound preferably comprises a polyurethane reaction mixture, for instance a polyurethane reaction mixture as for instance described in EP-B-0 379 246 (which is included herein by way of reference), which comprises a polyol and an isocyanate component. The curable compound is preferably formulated to produce an elastomer polyurethane material with a density greater than 400 kg/m³ and preferably greater than 500 kg/m³. Lower densities are however also possible. It is particularly possible to add a blowing agent, or a larger quantity of blowing agent, so that a foam will be produced, particularly with a density lower than 400 kg/m³ and more particularly lower than 250 kg/m³.

In order to control the flowing of compound 11 under opening 7 a zone 5 is provided. Zone 5 is delimited by a physical barrier 6 which is formed as an edge which extends from connection side 4 to the glass panel 2. Edge 6 extends continuously, i.e. without interruptions, all around zone 5, such that zone 5 forms a closed chamber which is provided at the top with opening 7.

As shown in figures 2 and 3 the compound, when applied from the top, will flow through opening 7 and thus substantially wholly fill zone 5. Physical barrier 6 prevents compound 11 from flowing beyond the zone 5 under connection side 4. Compound 11 is chosen so as to realize a good adhesive bond to panel 2. The compound hereby bonds to panel 2 and the compound is connected to panel 2.

In the embodiment of figure 1 edge 6 is preferably formed by a deformable material. Edge 6 can thus for instance be formed from a foam or an elastomer or a silicone. Edge 6 is here preferably manufactured slightly thicker in non-deformed state than the distance d between component 1 and panel 2. When component 1 is pressed with spacers 10 onto panel 2, a guaranteed good seal is realized by edge 6 between connection side 4 and panel 2. In an alternative embodiment (not shown) edge 6 can be formed to function simultaneously as edge 6 and as spacer 10. The distance d between connection side 4 of component 1 and panel 2 is thus determined by edge 6.

Formed above opening 7 is a further zone 8. In the embodiment of figure 1 the further zone 8 is formed by providing an upright edge 9 which extends all around the opening 7 and at a distance from the edges of opening 7. The object of further zone 8 is to form a bowl which, not taking into consideration the opening 7, can hold a liquid. Figure 4 shows the effect of the further zone when the compound has been applied. When the compound is applied, the compound will fill zone 5 under connecting side 4, fill opening 7 and also at least partially fill further zone 8. Upright edge 9 delimits the space within which the compound can flow when applied. Figure 4 shows the result of the construction of the component with zone 5, opening 7 and further zone 8. When the compound has been applied and is at least partially cured, it forms a mass which holds component 1 mechanically. This mass is referred to as connecting element.

The opening 7 is formed in the connection side 4 of component 1 and extends to an upper side of component 1. The opening is surrounded by edges which form part of the body of the component. These edges of opening 7 are preferably formed integrally with component 1. Zone 5 extends at least partially under the edges. In figure 4 the edges are designated with reference numeral 13. The further zone 8 also extends over at least a portion of the edges. Because the compound fills zone 5, fills opening 7 and at least partially fills further zone 8, the connecting element which holds component 1 mechanically is obtained after at least partial curing of the compound. The connecting element is clearly shown in figure 4, and encloses the edges 13 of opening 7 at least partially. Because edges 13 are at least partially enclosed by the connecting element at the top and bottom of component 1, component 1 is fixated relative to the connecting element. In other words, component 1 can no longer move relative to the connecting element because edges 13 of opening 7 are trapped in the connecting element. It is noted here that the fixation of the compound with component 1 is in the first place the result of a compatibility of shape between component 1 and the connecting element, and only in the second place the result of an adhesive force between the compound forming the connecting element and component 1. Figure 4 shows that, even if there were no adhesive force or only a negligible adhesive force between the connecting element and component 1, a rigid connection between component 1 and the connecting element will still result.

The specific construction of component 1, and the choice of compound, allows component 1 to be connected to panel 2. After partial curing, the compound will here form the connecting element between component 1 and panel 2. This connecting element is an intermediate element which is connected to panel 2 via adhesion. The intermediate element is further mechanically connected to component 1 via a compatibility of shape. In this way the intermediate element will connect component 1 to panel 2.

Figures 1-4 show different stages of the performing of the method for connecting a component 1 to a panel 2. Figure 1 shows the starting stage, in which component 1 is positioned on panel 2 and wherein the component and the panel are oriented such that opening 7 is situated above zone 5. This allows the compound to be applied from above component 1, for instance via a nozzle 12, and to flow through opening 7 as a result of the force of gravity. Figure 2 shows a stage in which zone 5 is partially filled. In figure 3 zone 5 is wholly filled and opening 7 is partially filled. The skilled person will appreciate that figure 3 shows a theoretical optimal situation in which zone 5 is wholly filled. In practice, it is possible for air bubbles to become trapped between the compound and the connection side, whereby zone 5 is not wholly filled. Because of the flow properties of the compound and because the component and the panel are oriented so that opening 7 extends above zone 5, tests have shown that zone 5 is always filled enough to realize the intended effects, more particularly the intended mechanical connection.

Figure 4 shows a final situation in which zone 5 is substantially wholly filled, opening 7 is substantially wholly filled, and further zone 8 is at least partially filled. In such a state as shown in figure 4, the compound will cure at least partially, whereby the component is connected to glass panel 2.

The skilled person will appreciate on the basis of the example given in figures 1-4 that various modifications can be made without departing from the principles of the invention. A plurality of openings 7 can thus be provided. A first opening can for instance be provided for allowing the compound to flow in, while the further openings function as vent for venting the zone 5. When a plurality of openings is provided, the plurality of openings 7 will be filled with the compound. The skilled person will also appreciate that a component 1 can be connected to panel 2 at multiple locations. This means that component 1 has a first section with a zone 5, an opening 7 and a further zone 8, and further has second section, separate from the first section, with a separate zone 5, a separate opening 7, and a separate further zone 8. These two sections can be filled or fed with the compound separately of each other so that component 1 is connected to panel 2 at two locations.

Figures 1-4 also make it apparent to the skilled person that the specific construction of the method according to the invention and of component 1 requires no further auxiliary means or moulds in order to connect component 1 via the compound to panel 2. The correct positioning of component 1 on panel 2 already allows for the compound to be applied and for the component to thus be connected to panel 2.

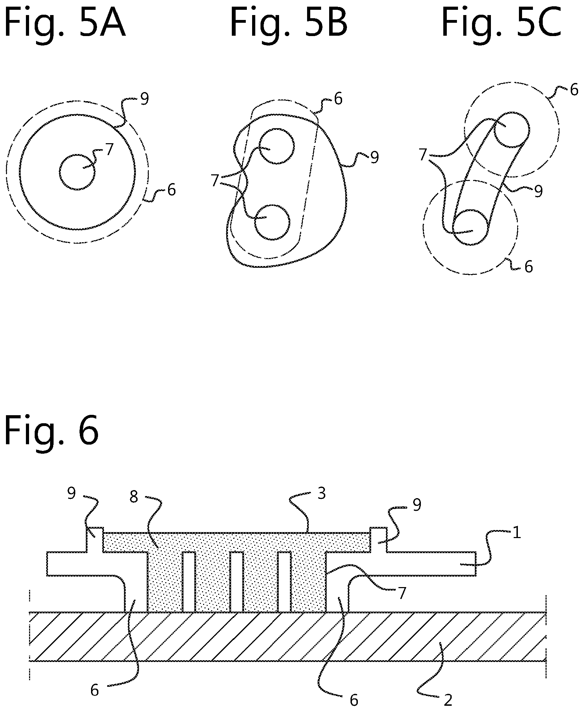

Figure 5 shows a top view of the component and, more specifically, shows how further zone 8, opening 7 and zone 5 relate to each other. Because figure 5 shows a top view, the upright edge 9 is shown with a full line, the edge of opening 7 is shown with a full line and, with a view to the description, the edge 6 is shown with a broken line. Edge 6 is situated on the underside of component 1 and is not visible in a top view in normal circumstances. Figure 5A shows the top view of component 1 of figure 1. In this component opening 7 is positioned substantially centrally within an upright edge 9 which extends all around opening 7. The edge 6 which delimits zone 5 is placed at a slightly greater distance from the edge of opening 7 than upright edge 9. Zone 5, delimited by edge 6, hereby extends slightly further than further zone 8, delimited by upright edge 9.

A good clamping of component 1 within the at least partially cured compound is obtained when the surface area of the zone, delimited by edge 6, is greater than the surface area of opening 7, and more preferably at least double the size of surface area of opening 7. When a plurality of openings 7 is provided, the sum of openings will in this context be deemed the surface area of opening 7. The surface area of the further zone 8 delimited by upright edge 9 is also greater than the surface area of opening 7, and preferably double the size of surface area of opening 7. Zones 5 and 8 hereby extend sufficiently over the edges 13 of opening 7 to hold these edges mechanically.

The skilled person will further appreciate that the opening 7 preferably covers a surface area which is sufficiently great to avoid tearing off of the compound in the opening in the context of use of component 1. The skilled person will also appreciate that the thickness of the compound at the position of zone 5 and zone 8 must be sufficient to prevent tearing off of the compound in a normal context of use of component 1.

Figures 5B and 5C show alternative embodiments of the invention in which a plurality of openings 7 is provided. Figure 5B clearly shows that the shape of zone 5 can differ from the shape of further zone 8. Figure 5C shows an embodiment wherein two openings 7 are provided, wherein two zones 5 are delimited by edges 6, each situated under each of the respective openings. At the position of the upper side of the component one upright edge 9 is provided for the two openings 7. Upright edge 9 is here formed such that not the whole edge of openings 7 is covered by further zone 8. Because the further zone does however extend over a portion of the edges of openings 7, a mechanical locking of the component relative to the compound is still obtained. These figures illustrate that different configurations are possible in respect of the design of the component, and more particularly in respect of the positioning and forming of the zones below and above the component. This freedom of design can be used by the skilled person in the context of the objective of the component in order to connect the component in optimal manner to panel 2 and also allow it to perform its function in an optimal manner.

In the context of this description a mechanical connection is defined as a connection between two elements which is created as a direct result of a compatibility of shape between these two elements. The shape and position of the two elements relative to each other prevent the relative movement of the elements relative to each other, irrespective of any adhesive force between the elements. An adhesive connection is defined as a connection between two elements which is created as a direct result of an adhesive force between these two elements. An adhesive connection can connect two elements to each other irrespective of the shape.

Figure 6 shows an alternative embodiment wherein the surface area of the lower zone is substantially the same size as the surface area of opening 7. In order to realize sufficient adhesive force between compound 3 and panel 2 in such an embodiment, a sufficiently large surface area of opening 7 is chosen. A plurality of openings is for this purpose provided in the embodiment of figure 6. Because of the specific construction, it is no longer possible to distinguish physically between opening 7 and lower zone 5. In the context of the invention a lower segment of opening 7 is in this embodiment deemed a lower zone 5. The mechanical connection between cured compound 3 and component 1 is still realized in that an upper zone 8 is at least partially filled with compound 3. The skilled person will appreciate that the component is clamped between upper zone 8 and panel 2. This is because the compound bonds to panel 2 via openings 7, so that panel 2 and compound 3 are rigidly connected and thereby form a solid combination. Component 1 is clamped in this solid combination according to the same principles elucidated above with reference to figures 1-4. At the bottom of component 1 the edges of openings 7 form the physical barrier 6 which prevents the compound from being able to flow out of the lower zone. At the top of component 1 upright edges 9 form the limits of further zone 8.

An advantage of the embodiment of figures 1-4, in which a lower zone 5 is formed with a surface area greater than the surface area of the openings, is that a greater adhesion zone can be realized for the panel and the compound in simple manner. As elucidated in figure 5, an optimal balance can also be found between position and size of the openings, position, size and shape of lower zone 5 and position, size and shape of further zone 8, almost irrespectively of each other, so that the component can be designed optimally and with great design freedom, depending on its intended functionality.

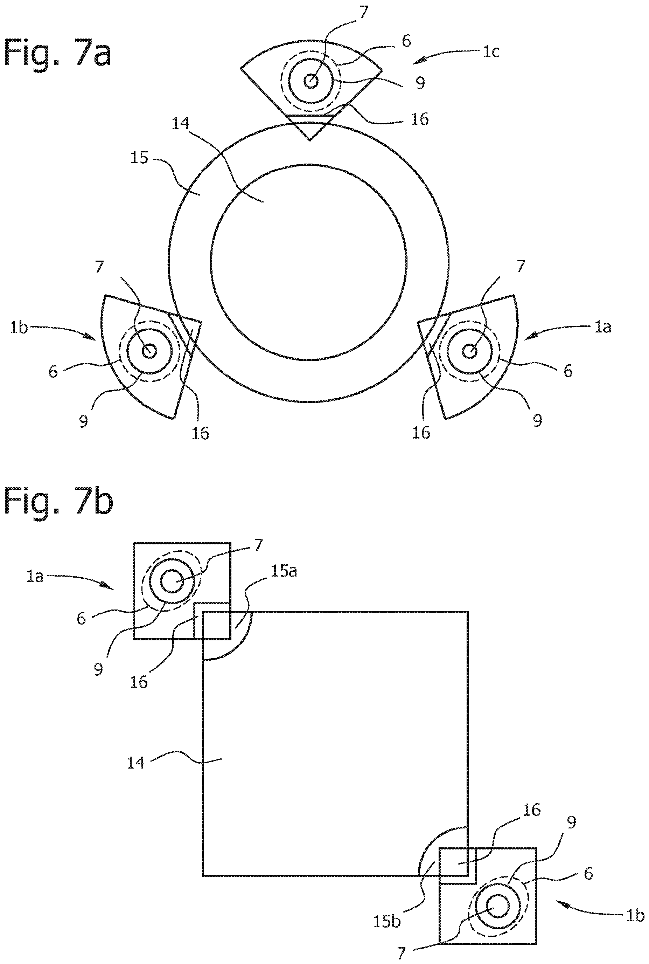

Figure 7 shows a further application of the above described component. More specifically, figure 7 shows an external part 14 which is connected to the panel via at least one, preferably at least two components as described above. External part 14 has for this purpose an edge 15. In the embodiment of figure 7a the edge 15 takes a substantially continuous form and a plurality of components 1 can be placed at different locations along the edge 15 and grip with their flange 16 over the edge. External part 14 is hereby connected via the components to the panel.

In the embodiment of figure 7a three components 1a, 1b and 1c are provided at a mutual distance, distributed over the periphery of the external part. Each component has a flange 16 which engages over the edge 15 of part 14. More specifically, component 1 extends with its flange 16 at least partially over edge 15 of part 14 such that part 14 is situated with its edge 15 between panel 2 and flange 16. The skilled person will appreciate that part 14 is hereby indirectly connected to panel 2. This technique allows an external part 14 to be connected to a panel 2 without the provision of glue or a another bond directly between part 14 and panel 2. Each component is provided with an edge 6, an opening 7 and an upright edge 9, as described at length above. Each component can hereby be fixedly connected to the panel, wherein a bond between the compound and the panel on the one hand and a mechanical connection between the compound and the component on the other hand provides for the connection. The external part is also fixedly connected to panel 2 by a mechanical clamping between components 1a, 1b and 1c on the one hand and part 14 on the other.

Figure 7b shows an alternative embodiment wherein an external part 14 does not have continuous edge 15. External part 14 has two opposite edges 15a and 15b which extend over only a limited portion of the periphery of external part 14. At the position of opposite edges 15a and 15b corresponding components 1a and 1b are fixedly connected to panel 2. Components 1a and 1b extend with their flange 16 over the respective edges 15a and 15b in order to connect the external components 14 via components 1a and 1b to the panel. Figures 7a and 7b illustrate that the appearance of components 1 is not important and can be chosen on the basis of available space and operating parameters in order to realize a good connection within the available space.

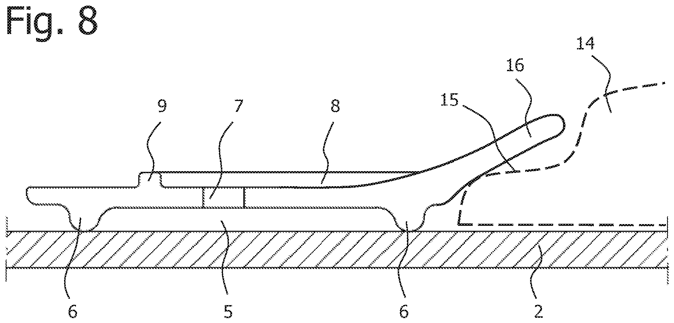

Figure 8 shows an embodiment of a component 1 with a flange 16 which is suitable for holding an external part 14 on a panel 2. Figure 8 shows external part 14 with a broken line. External part 14 has an edge 15. At least a portion of component 1 extends over the edge, more specifically, flange 16 of component 1 extends over edge 15. In this way flange 16 holds edge 15 on panel 2.

Component 1 is connected to the panel, as described at length above. Component 1 is for this purpose provided with an edge 6. In the embodiment of figure 8 edge 6 is at the same time the spacer. Edge 6 forms a zone 5 in which the compound can spread. Further provided is an opening and an upright edge 9 which forms the further zone 8. In the embodiment of figure 8 a portion of upright edge 9 is formed by flange 16. Flange 16 extends at a distance from panel 2 when component 1 is connected to panel 2. In the embodiment of figure 8 the distance between flange 16 and panel 2 is not constant, but the distance is smaller proximally of the flange and greater distally thereof. In other words, a tapered space is formed between flange 16 and the panel. Because of the tapered space, component 1 is usable in many situations and for the purpose of fixing various external components, wherein the shape and thickness of the edges 15 of external components 14 can vary. Owing to the tapered space, the position of the component relative to the external part can be chosen so as to obtain a predetermined clamping.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention is not therefore limited to the embodiments described herein, but is defined in the claims.

## Claims

1. Method for connecting an external part (14) to a panel (2) using at least two components (1a, 1b, 1c), wherein each component has a flange (16) for engaging at least partially over an edge (15) of the external part, and wherein the method comprises placing the two components each engaging with their flange over the edge and thus connect the external part to the panel via the two components wherein each component comprises a connection side (4) which is positioned at a distance from the panel and wherein a compound (11) is introduced between the connection side and the panel,
a (5) zone is delimited between the connection side and the panel such that a physical barrier (6) is formed for the compound, which zone has at least an opening (7) in the connection side, and wherein a compound in liquid form is applied above the opening so as to flow through the opening and fill the zone, wherein above said opening a further zone (8) is at least partially filled by the compound such that, after at least partial curing of the compound, the component is held mechanically by the compound.

2. Method according to claim 1, wherein the compound has a dynamic viscosity, measured at a shear rate of 1/s, of lower than 35,000 mPa.s when it comes to lie on at least a part of the panel.

3. Method according to claim 1 or 2, wherein the panel is a glass panel.

4. Method according to any one of the foregoing claims, wherein the zone is delimited by the provision of an edge which extends all around the zone between the connection side and the panel in order to prevent the glue from flowing beyond the edge.

5. Method according to claim 4, wherein the edge is formed by a thickened portion on the connection side of the component.

6. Method according to claim 4 or 5, wherein the edge is formed by a compressible material and has a thickness equal to or greater than the stated distance, such that tolerances in said distance are compensated for by the edge.

7. Method according to any one of the foregoing claims, wherein the method further comprises of, during or after positioning of the component, orienting the panel with the component such that the opening is situated above the zone.

8. Method according to any one of the foregoing claims, wherein the further zone is delimited by the provision of an upright edge (9) which extends all around the opening.

9. Method according to any one of the foregoing claims, wherein the opening covers a first surface area and wherein the zone extends over a second surface area, greater than the first surface area, and wherein the further zone extends over a third surface area greater than the first surface area.

10. Method according to claim 9, wherein the second surface area is at least double the size of the first surface area and wherein the third surface area is at least double the size of the first surface area.

11. Method according to claim 9 or 10, wherein the size of the first surface area amounts to at least 5%, preferably at least 10% of the size of the second surface area.

12. Method according to any one of the foregoing claims, wherein the zone is formed with a thickness greater than 0.5 mm, preferably greater than 1.0 mm.

13. Method according to any one of the foregoing claims, wherein the further zone is filled such that the compound extends at least 0.5 mm, preferably at least 1.0 mm above the edge of the opening.

## Patentansprüche

1. Verfahren zum Verbinden eines Außenteils (14) mit einer Platte (2) mithilfe von mindestens zwei Bauteilen (1a, 1b, 1c),
wobei jedes Bauteil einen Flansch (16) aufweist, um zumindest teilweise einen Rand (15) des Außenteils zu übergreifen, und wobei das Verfahren das Anordnen der zwei Bauteile aufweist, die jeweils mit ihrem Flansch den Rand übergreifen und somit das Außenteil über die zwei Bauteile mit der Platte verbinden, wobei jedes Bauteil eine Verbindungsseite (4) aufweist, die in einem Abstand von der Platte positioniert ist, und wobei eine Zusammensetzung (11) zwischen die Verbindungsseite und die Platte eingebracht wird,
wobei ein Bereich (5) zwischen der Verbindungsseite und der Platte derart begrenzt ist, dass eine physische Barriere (6) für die Zusammensetzung gebildet wird, wobei der Bereich mindestens eine Öffnung (7) in der Verbindungsseite aufweist, und wobei eine Zusammensetzung in flüssiger Form über der Öffnung so aufgebracht wird, dass sie durch die Öffnung fließt und den Bereich ausfüllt, wobei über der Öffnung ein weiterer Bereich (8) zumindest teilweise durch die Zusammensetzung derart ausgefüllt wird, dass nach zumindest teilweisem Aushärten des Zusammensetzung das Bauteil mechanisch von der Zusammensetzung gehalten wird.

2. Verfahren nach Anspruch 1, wobei die Zusammensetzung eine dynamische Viskosität, gemessen bei einer Scherrate von 1/s, von weniger als 35.000 mPa.s aufweist, wenn sie auf zumindest einem Teil der Platte zu liegen kommt.

3. Verfahren nach Anspruch 1 oder 2, wobei es sich bei der Platte um eine Glasplatte handelt.

4. Verfahren nach einem der vorhergehenden Ansprüche, wobei der Bereich durch das Vorsehen eines Randes begrenzt wird, welcher sich um den gesamten Bereich zwischen der Verbindungsseite und der Platte erstreckt, um zu verhindern, dass der Klebstoff über den Rand fließt.

5. Verfahren nach Anspruch 4, wobei der Rand durch einen verdickten Abschnitt auf der Verbindungsseite des Bauteils gebildet wird.

6. Verfahren nach Anspruch 4 oder 5, wobei der Rand durch ein komprimierbares Material gebildet wird und eine Dicke gleich dem oder größer als der angegebene Abstand aufweist, so dass durch den Rand Toleranzen in dem Abstand ausgeglichen werden.

7. Verfahren nach einem der vorhergehenden Ansprüche, wobei das Verfahren während oder nach der Positionierung des Bauteils weiterhin ein Ausrichten der Platte mit dem Bauteil derart umfasst, dass die Öffnung über dem Bereich liegt.

8. Verfahren nach einem der vorhergehenden Ansprüche, wobei der weitere Bereich durch das Vorsehen eines aufrechtstehenden Randes (9) begrenzt ist, der sich um die gesamte Öffnung herum erstreckt.

9. Verfahren nach einem der vorhergehenden Ansprüche, wobei die Öffnung eine erste Fläche bedeckt und wobei sich der Bereich über eine zweite Fläche erstreckt, die größer als die erste Fläche ist, und wobei sich der weitere Bereich über eine dritte Fläche erstreckt, die größer als die erste Fläche ist.

10. Verfahren nach Anspruch 9, wobei die zweite Fläche mindestens doppelt so groß wie die erste Fläche ist und wobei die dritte Fläche mindestens doppelt so groß wie die erste Fläche ist.

11. Verfahren nach Anspruch 9 oder 10, wobei die Größe der ersten Fläche mindestens 5%, vorzugsweise mindestens 10% der Größe der zweiten Fläche beträgt.

12. Verfahren nach einem der vorhergehenden Ansprüche, wobei der Bereich mit einer Dicke größer als 0,5 mm, vorzugsweise größer als 1,0 mm, ausgebildet ist.

13. Verfahren nach einem der vorhergehenden Ansprüche, wobei der weitere Bereich derart ausgefüllt wird, dass sich die Zusammensetzung mindestens 0,5 mm, vorzugsweise mindestens 1,0 mm, über den Rand der Öffnung erstreckt.

## Revendications

1. Procédé pour relier une pièce externe (14) à un panneau (2) en utilisant au moins deux éléments (la, 1b, lc), dans lequel chaque élément a un collet (16) pour venir en prise au moins partiellement sur un bord (15) de la pièce externe, et dans lequel le procédé comprend le placement des deux éléments venant chacun en prise avec leur collet sur le bord et relient ainsi la pièce externe au panneau via les deux éléments dans lequel chaque élément comprend un côté de liaison (4) qui est positionné à une distance du panneau et dans lequel un composé (11) est introduit entre le côté de liaison et le panneau, une zone (5) est délimitée entre le côté de liaison et le panneau de sorte qu'une barrière physique (6) soit formée pour le composé, laquelle zone a au moins une ouverture (7) dans le côté de liaison, et dans lequel un composé sous forme liquide est appliqué au-dessus de l'ouverture de manière à couler à travers l'ouverture et remplir la zone, dans lequel au-dessus de ladite ouverture une autre zone (8) est au moins partiellement remplie par le composé de sorte que, après un durcissement au moins partiel du composé, l'élément soit maintenu mécaniquement par le composé.

2. Procédé selon la revendication 1, dans lequel le composé a une viscosité dynamique, mesurée à un taux de cisaillement de 1/s, de moins de 35 000 mPa.s lorsqu'il vient à reposer sur au moins une partie du panneau.

3. Procédé selon la revendication 1 ou 2, dans lequel le panneau est un panneau de verre.

4. Procédé selon l'une quelconque des revendications précitées, dans lequel la zone est délimitée par la fourniture d'un bord qui s'étend tout autour de la zone entre le côté de liaison et le panneau afin d'empêcher la colle de couler au-delà du bord.

5. Procédé selon la revendication 4, dans lequel le bord est formé par une portion épaissie sur le côté de liaison de l'élément.

6. Procédé selon la revendication 4 ou 5, dans lequel le bord est formé par un matériau compressible et a une épaisseur égale à ou plus grande que la distance spécifiée, de sorte que des tolérances dans ladite distance soient compensées par le bord.

7. Procédé selon l'une quelconque des revendications précitées, dans lequel le procédé se compose en outre, durant ou après le positionnement de l'élément, de l'orientation du panneau avec l'élément de sorte que l'ouverture soit située au-dessus de la zone.

8. Procédé selon l'une quelconque des revendications précitées, dans lequel l'autre zone est délimitée par la fourniture d'un bord droit (9) qui s'étend tout autour de l'ouverture.

9. Procédé selon l'une quelconque des revendications précitées, dans lequel l'ouverture couvre une première superficie et dans lequel la zone s'étend sur une deuxième superficie, plus grande que la première superficie, et dans lequel l'autre zone s'étend sur une troisième superficie plus grande que la première superficie.

10. Procédé selon la revendication 9, dans lequel la deuxième superficie est au moins le double de la taille de la première superficie et dans lequel la troisième superficie est au moins le double de la taille de la première superficie.

11. Procédé selon la revendication 9 ou 10, dans lequel la taille de la première superficie s'élève à au moins 5 %, de préférence au moins 10 %, de la taille de la deuxième superficie.

12. Procédé selon l'une quelconque des revendications précitées, dans lequel la zone est formée avec une épaisseur plus grande que 0,5 mm, de préférence plus grande que 1,0 mm.

13. Procédé selon l'une quelconque des revendications précitées, dans lequel l'autre zone est remplie de sorte que le composé s'étende sur au moins 0,5 mm, de préférence au moins 1,0 mm, au-dessus du bord de l'ouverture.
